# EUROPEAN PATENT APPLICATION

(11) **EP 4 207 414 A1**
(43) Date of publication of application: **05.07.2023**
(21) Application number: 22216687.8
(22) Date of filing: 27.12.2022
(51) Int. Cl.: H01M 10/052, H01M 10/0525, H01M 10/42, H01M 10/46, H01M 50/543, H01M 50/553, H02J 7/00, H01M 10/48

(54) **RECHARGEABLE BATTERY**

(30) Priority: 30.12.2021 TW 110215731 U
(71) Applicant: APO International Co., Ltd., Taipei City (TW)
(72) Inventor: CHEN, Hsiang-Ming, Taipei City (TW)
(74) Representative: dompatent von Kreisler Selting Werner - Partnerschaft von Patent- und Rechtsanwälten mbB

(57) **Abstract**

One embodiment of the disclosure provides a rechargeable battery (10) including a shell (100), a circuit board assembly (200), a core (300) and an electrode assembly (400). The shell has a first outer surface (131). The circuit board assembly is disposed in the shell. The core is disposed in the shell and electrically connected to the circuit board assembly. The electrode assembly is disposed on the first outer surface of the shell and electrically connected to the circuit board assembly. The circuit board assembly is not located between the core and the first outer surface.

## Description

### Technical Field

The disclosure relates to a battery, more particularly to a rechargeable battery.

### Background

A battery is an device that converts its own stored chemical energy into electrical energy. Rechargeable battery is a common type of battery, which generally refers to a battery that can be recharged after a certain amount of the power is used and can be repeatedly used . Since lithium-ion batteries are rechargeable batteries with high energy density, the lithium-ion batteries are widely applied to consumer electronics, military products, aviation products, and the like.

However, in a conventional lithium-ion battery, a circuit board assembly is located between a core and an electrode assembly. Therefore, when the exposed electrode assembly is subjected to external impacts since the battery is accidentally dropped or hit with other objects during use, the circuit board assembly located between the core and the electrode assembly is easily damaged due to the aforementioned external impacts, thereby causing a malfunction of the lithium-ion battery.

### SUMMARY

The disclosure provides a rechargeable battery whose circuit board assembly is not located between a core and a first outer surface where an electrode assembly is disposed, thereby preventing the circuit board assembly from being damaged due to external impacts on the electrode assembly.

One embodiment of the disclosure provides a rechargeable battery including a shell, a circuit board assembly, a core and an electrode assembly. The shell has a first outer surface. The circuit board assembly is disposed in the shell. The core is disposed in the shell and electrically connected to the circuit board assembly. The electrode assembly is disposed on the first outer surface of the shell and electrically connected to the circuit board assembly. The circuit board assembly is not located between the core and the first outer surface.

According to the rechargeable battery disclosed by above embodiments, since the circuit board assembly is not located between the core and the first outer surface and the electrode assembly is disposed on the first outer surface, cables electrically connected to the electrode assembly and the circuit board assembly can be prevented from being pulled due to external impacts on the electrode assembly, thereby preventing electrical contacts of the circuit board assembly from being damaged or protecting other electronic components on the circuit board assembly. Accordingly, a malfunction of the rechargeable battery is prevented.

### BRIEF DESCRIPTION OF THE DRAWINGS

The present disclosure will become better understood from the detailed description given herein below and the accompanying drawings which are given by way of illustration only and thus are not intending to limit the present disclosure and wherein:
FIG. 1 is a perspective view of a rechargeable battery in accordance with a first embodiment of the disclosure;
FIG. 2 is an exploded view of the rechargeable battery in FIG. 1;
FIG. 3 is another exploded view of the rechargeable battery in FIG. 1;
FIG. 4 is a perspective view of a rechargeable battery in accordance with a second embodiment of the disclosure;
FIG. 5 is an exploded view of the rechargeable battery in FIG. 4; and
FIG. 6 is another exploded view of the rechargeable battery in FIG. 4.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present disclosure. The following embodiments further illustrate various aspects of the present disclosure, but are not meant to limit the scope of the present disclosure.

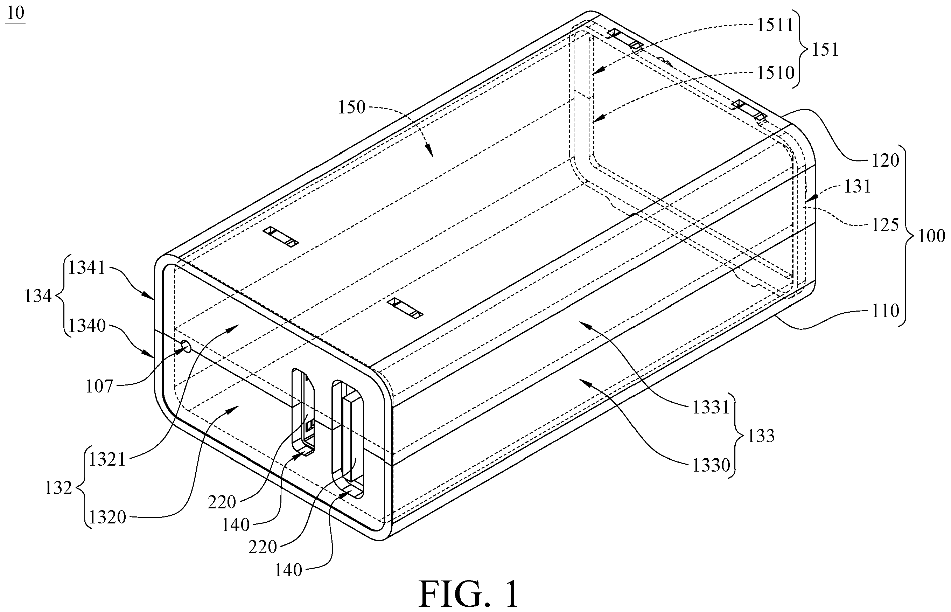

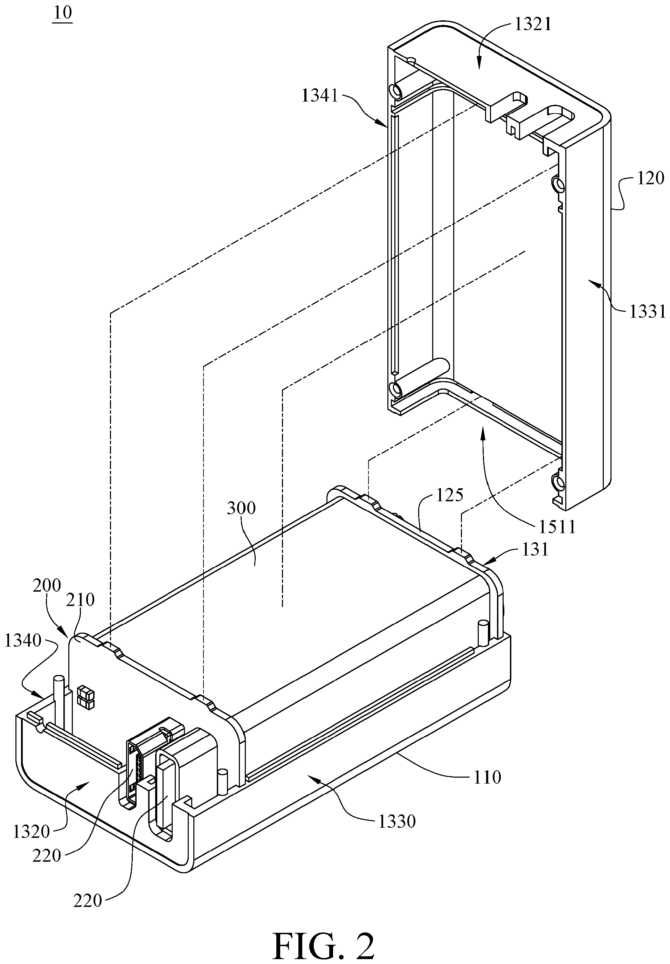

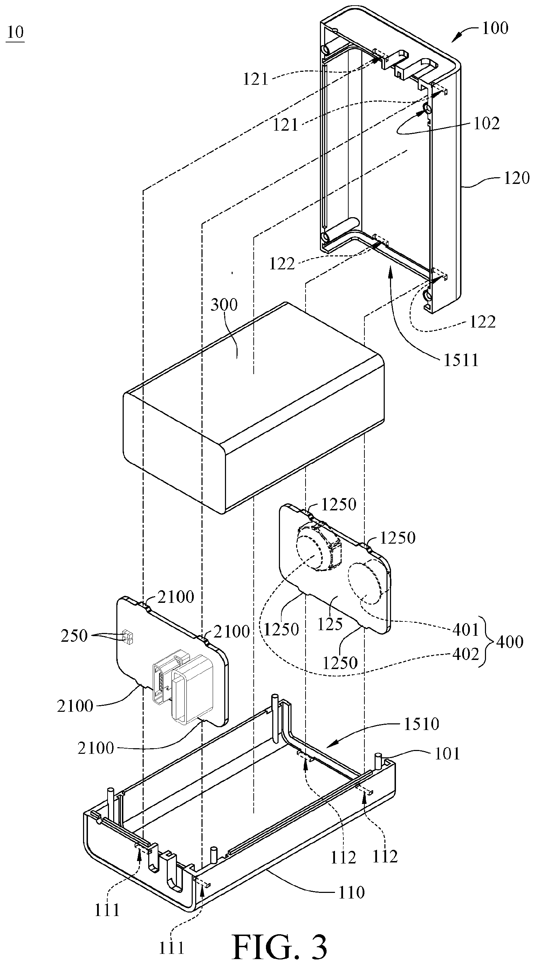

Please refer to FIGS. 1 to FIG. 3, where FIG. 1 is a perspective view of a rechargeable battery 10 in accordance with a first embodiment of the disclosure, FIG. 2 is an exploded view of the rechargeable battery 10 in FIG. 1, and FIG. 3 is another exploded view of the rechargeable battery 10 in FIG. 1.

In this embodiment, the rechargeable battery 10 includes a shell 100, a circuit board assembly 200, a core 300 and an electrode assembly 400. In this embodiment, the rechargeable battery 10 is, for example, a 9-volt (V) lithium-ion battery.

In this embodiment, the shell 100 includes a first side casing 110, a second side casing 120 and a top plate 125, and the shell 100 has a first outer surface 131, a second outer surface 132, a fourth outer surface 134 and two through holes 140. The first side casing 110 and the second side casing 120 are fixed to each other, and together form an accommodation space 150 and an opening 151. The opening 151 is connected to the accommodation space 150 and is located at a side of the accommodation space 150. Specifically, the opening 151 is together formed by a notch 1510 of the first side casing 110 and a notch 1511 of the second side casing 120. The top plate 125 is disposed in the opening 151. The first outer surface 131 is located on the top plate 125. An outer surface 1320 of the first side casing 110 and an outer surface 1321 of the second side casing 120 together form the second outer surface 132, an outer surface 1330 of the first side casing 110 and an outer surface 1331 of the second side casing 120 together form the third outer surface 133, and an outer surface 1340 of the first side casing 110 and an outer surface 1341 of the second side casing 120 together form the fourth outer surface 134. The first outer surface 131 and the second outer surface 132 face away from each other. The third outer surface 133 and the fourth outer surface 134 face away from each other, and are located between the first outer surface 131 and the second outer surface 132. The first outer surface 131, the second outer surface 132, the third outer surface 133 and the fourth outer surface 134 face away from the accommodation space 150. The two through holes 140 are located on the second outer surface 132, and are spaced apart from each other. In addition, the two through holes 140 are connected to the accommodation space 150.

The circuit board assembly 200 is disposed in the shell 100. Specifically, in this embodiment, the circuit board assembly 200 includes a circuit board 210 and two connectors 220. The two connectors 220 are fixed on and electrically connected to the circuit board 210. The circuit board 210 is disposed in the accommodation space 150. The two connectors 220 are located between the circuit board 210 and the second outer surface 132 together formed by the outer surface 1320 and the outer surface 1321. The two through holes 140 expose the two connectors 220, respectively. In addition, in this embodiment, the two connectors 220 have different specifications so that the rechargeable battery 10 can be applied to cables of different specifications. For example, the specifications of the two connectors 220 are USB Type-C and Micro-USB, respectively.

Note that the specifications of the two connectors 220 are not restricted to being different from each other. In other embodiments, the specifications of the two connectors may also be the same. In addition, the two connectors 220 are not restricted to being located between the circuit board 210 and the second outer surface 132. In other embodiments, the two connectors may also be located between the circuit board and the third outer surface.

The core 300 is disposed in the shell 100 and electrically connected to the circuit board assembly 200. Specifically, the core 300 is disposed in the accommodation space 150 and electrically connected to the circuit board 210.

The electrode assembly 400 is disposed on the first outer surface 131 of the shell 100 and electrically connected to the circuit board assembly 200. Specifically, the electrode assembly 400 includes a first electrode 401 and a second electrode 402. The first electrode 401 and the second electrode 402 are disposed on the first outer surface 131 of the top plate 125, and electrically connected to the circuit board 210. In addition, the first electrode 401 and the second electrode 402 are, for example, a positive electrode and a negative electrode, respectively.

The circuit board assembly 200 is not located between the core 300 and the first outer surface 131. Specifically, in this embodiment, the circuit board assembly 200 is located between the core 300 and the second outer surface 132 together formed by the outer surface 1320 and the outer surface 1321, where the second outer surface 132 faces away from the first outer surface 131 on which the electrode assembly 400 is disposed. Specifically, the circuit board 210 is located between the core 300 and the second outer surface 132. Accordingly, the circuit board assembly 200 is spaced apart from the electrode assembly 400 via the core 300, thereby further preventing the circuit board assembly 200 from being damaged by external impacts on the electrode assembly 400.

In this embodiment, the shell 100 further includes a plurality of engagement columns 101 and has a plurality of engagement holes 102. The plurality of engagement columns 101 are located in the accommodation space 150 and protrude toward the second side casing 120 from the first side casing 110. The plurality of engagement holes 102 are located on a side of the second side casing 120 closest to the first side casing 110. The plurality of engagement columns 101 are engaged with the plurality of engagement holes 102 respectively to fix the first side casing 110 and the second side casing 120 to each other.

In this embodiment, the first side casing 110 has two first positioning holes 111, and the second side casing 120 has two second positioning holes 121. The circuit board 210 has four positioning protrusions 2100. The four positioning protrusions 2100 of the circuit board 210 are positioned in the two first positioning holes 111 and the two second positioning holes 121, respectively.

In this embodiment, the first side casing 110 has two third positioning holes 112, and the second side casing 120 has two fourth positioning holes 122. The top plate 125 has four positioning protrusions 1250. The four positioning protrusions 1250 of the top plate 125 are positioned in the two third positioning holes 112 and the two fourth positioning holes 122, respectively.

In this embodiment, the shell 100 further has a light transmission hole 107. The first side casing 110 and the second side casing 120 together form the light transmission hole 107, and the light transmission hole 107 is located on the second outer surface 132. The circuit board assembly 200 further includes two light emitting components 250. The two light emitting components 250 are electrically connected to the circuit board 210 and configured to emit light toward the light transmission hole 107. For example, the two light emitting components 250 are configured to emit, for example, green light and red light to show a fully charged state and a not fully charged state of the rechargeable battery 10, respectively.

Note that the two through holes 140 are not restricted to being located on the second outer surface 132. In other embodiments, the placing direction of the two connectors on the circuit board may also be changed to allow the openings of the two connectors to face the third outer surface or the fourth outer surface. In this case, the two through holes may be disposed on the third outer surface or the fourth outer surface to expose the two connectors.

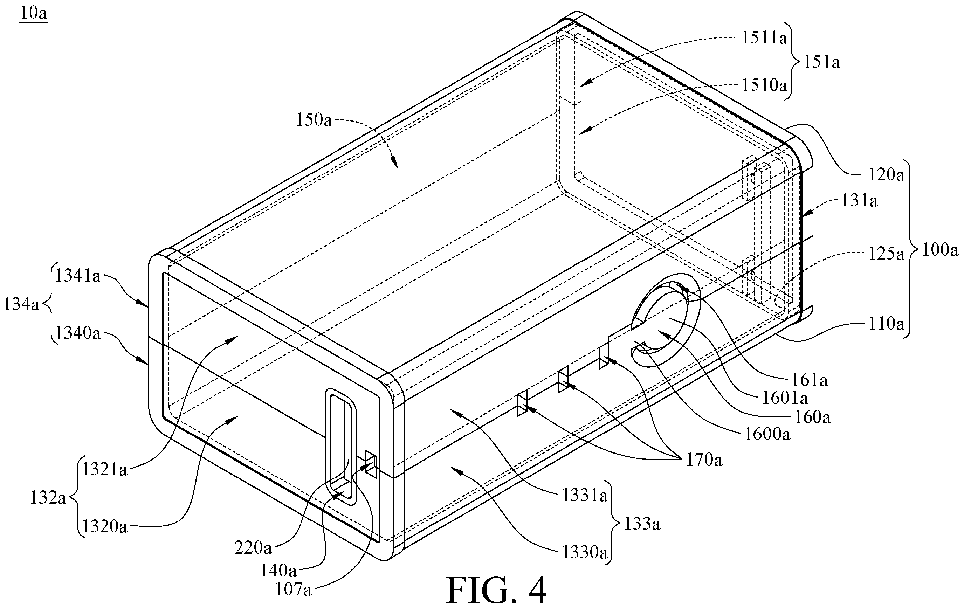

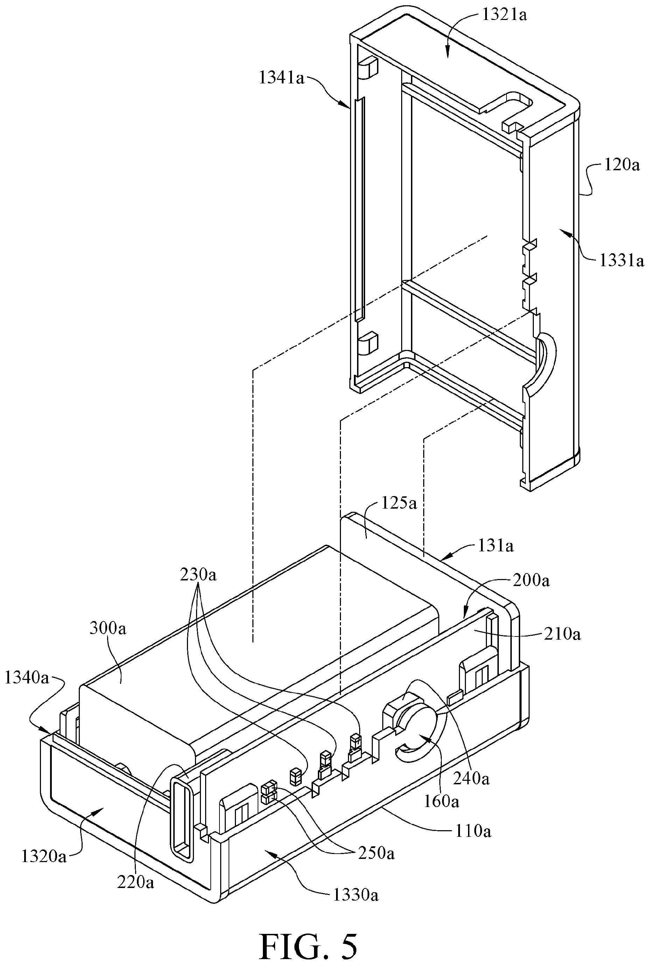

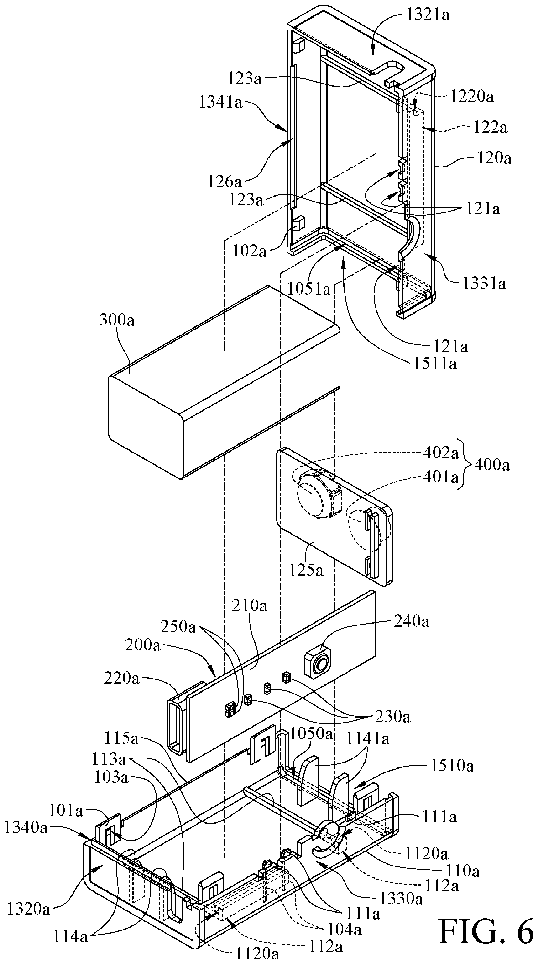

Please refer to FIGS. 4 to 6, where FIG. 4 is a perspective view of a rechargeable battery 10a in accordance with a second embodiment of the disclosure, FIG. 5 is an exploded view of the rechargeable battery 10a in FIG. 4, and FIG. 6 is another exploded view of the rechargeable battery 10a in FIG. 4.

In this embodiment, the rechargeable battery 10a includes a shell 100a, a circuit board assembly 200a, a core 300a and an electrode assembly 400a. In this embodiment, the rechargeable battery 10a is, for example, a 9-volt (V) lithium-ion battery.

In this embodiment, the shell 100a includes a first side casing 110a, a second side casing 120a and a top plate 125a, and the shell 100a has a first outer surface 131a, a second outer surface 132a, a fourth outer surface 134a and a through hole 140a. The first side casing 110a and the second side casing 120a are fixed to each other and together form an accommodation space 150a and an opening 151a. The opening 151a is connected to the accommodation space 150a and is located at a side of the accommodation space 150a. Specifically, the opening 151a is together formed by a notch 1510a of the first side casing 110a and a notch 1511a of the second side casing 120a. The top plate 125a is disposed in the opening 151a. An outer surface 1320a of the first side casing 110a and an outer surface 1321a of the second side casing 120a together form the second outer surface 132a, an outer surface 1330a of the first side casing 110a and an outer surface 1331a of the second side casing 120a together form the third outer surface 133a, and an outer surface 1340a of the first side casing 110a and an outer surface 1341a of the second side casing 120a together form the fourth outer surface 134a. The first outer surface 131a and the second outer surface 132a face away from each other. The third outer surface 133a and the fourth outer surface 134a face away from each other and are located between the first outer surface 131a and the second outer surface 132a. The first outer surface 131a, the second outer surface 132a, the third outer surface 133a and the fourth outer surface 134a face away from the accommodation space 150a. The through hole 140a is located on the second outer surface 132a. In addition, the through hole 140a is connected to the accommodation space 150a.

The circuit board assembly 200a is disposed in the shell 100a. Specifically, in this embodiment, the circuit board assembly 200a includes a circuit board 210a and a connector 220a. The connector 220 is fixed on and electrically connected to the circuit board 210a. The circuit board 210a is disposed in the accommodation space 150a. The through hole 140a exposes the connector 220a. The specification of the connector 220 is, for example, an USB Type-C.

The core 300a is disposed in the shell 100a and electrically connected to the circuit board assembly 200a. Specifically, the core 300a is disposed in the accommodation space 150a and electrically connected to the circuit board 210a. In this embodiment, the connector 220a is located between the core 300a and the third outer surface 133a together formed by the outer surface 1330a and the outer surface 1331a, but the present disclosure is not limited thereto. In some other embodiments, the connector may also be located between the circuit board and the third outer surface.

The electrode assembly 400a is disposed on the first outer surface 131a of the shell 100a and electrically connected to the circuit board assembly 200a. Specifically, the electrode assembly 400a includes a first electrode 401a and a second electrode 402a. The first electrode 401a and the second electrode 402a are disposed on the first outer surface 131a of the top plate 125a and electrically connected to the circuit board 210a. In addition, the first electrode 401a and the second electrode 402a are, for example, a positive electrode and a negative electrode, respectively.

The circuit board assembly 200a is not located between the core 300a and the first outer surface 131a. Specifically, in this embodiment, the circuit board assembly 200a is located between the core 300a and the third outer surface 133a together formed by the outer surface 1330a and the outer surface 1331a, where the third outer surface 133a is located between the first outer surface 131a on which the electrode assembly 400a is disposed and the second outer surface 132a facing away from the first outer surface 131a. Specifically, the circuit board 210a is located between the core 300a and the third outer surface 133a. Accordingly, the circuit board assembly 200a is disposed in an idle space between the core 300a and the third outer surface 133a, thereby improving the space utilization rate of the accommodation space 150a of the shell 100a.

In this embodiment, the shell 100a further has a plurality of engagement structures 101a and a plurality of engagement protrusions 102a. The plurality of engagement structures 101a are located in the accommodation space 150a, and protrude toward the second side casing 120a from the first side casing 110a. In addition, each engagement structure 101a has an engagement hole 103a. The plurality of engagement protrusions 102a protrude toward the accommodation space 150a from the second side casing 120a. The plurality of engagement protrusions 102a are engaged with the plurality of engagement hole 103a respectively to fix the first side casing 110a and the second side casing 120a to each other. In addition, in this embodiment, the opposite sides of the first side casing 110a have a plurality of engagement protrusions 111a and an engagement bar 115a, respectively. The opposite sides of the second side casing 120a have a plurality of engagement holes 121a and an engagement recess 126a, respectively. The plurality of engagement protrusion 111a are engaged with the plurality of engagement holes 121a, respectively. The engagement bar 115a is engaged with the engagement recess 126a. Thus, the first side casing 110a and the second side casing 120a is stably fixed to each other. In addition, in this embodiment, the shell 100a further includes a plurality of ribs 104a. The plurality of ribs 104a are disposed on sides of some of the engagement protrusion 111a closest to the accommodation space 150a.

In this embodiment, the first side casing 110a further has two first positioning structures 112a. The two first positioning structures 112a are spaced apart from each other. The two first positioning structures 112a are located in the accommodation space 150a, and protrude toward the second side casing 120a. The second side casing 120a further has a second positioning structure 122a. The second positioning structure 122a is located in the accommodation space 150a and protrude toward the first side casing 110a. The opposite sides of the circuit board 210a are positioned in two first positioning recess 1120a of the two first positioning structures 112a and two second positioning recess 1220a of the second positioning structure 122a, respectively.

In this embodiment, the first side casing 110a further has two first contacting bars 113a spaced apart from each other. The two first contacting bars 113a are located in the accommodation space 150a, and protrude toward the second side casing 120a. The second side casing 120a further has two second contacting bars 123a spaced apart from each other. The two second contacting bars 123a are located in the accommodation space 150a, and protrude toward the first side casing 110a. The opposite sides of the core 300a rest on the two first contacting bars 113a and the two second contacting bars 123a, respectively.

In this embodiment, the first side casing 110a further has two first stop structures 114a and two second stop structures 1141a spaced apart from one another. The two first stop structures 114a and the two second stop structures 1141a are located in the accommodation space 150a, and protrude toward the second side casing 120a. The core 300a is located between the two first stop structures 114a and the two second stop structures 1141a. That is, the two first stop structures 114a and the two second stop structures 1141a are located on opposite sides of the core 300a, respectively. Thus, the external impacts is further prevented from affecting the core 300a.

In this embodiment, the first side casing 110a further has a positioning recess 1050a, and the second side casing 120a further has a positioning recess 1051a. The top plate 125a is positioned in the positioning recesses 1050a and 1051a.

In this embodiment, the shell 100a further has a light transmission hole 107a. The first side casing 110a and the second side casing 120a together form the light transmission hole 107a, and the light transmission hole 107a is located on the second outer surface 132a. The circuit board assembly 200a further includes two light emitting components 250a. The two light emitting components 250a are electrically connected to the circuit board 210a and configured to emit light toward the light transmission hole 107a. For example, the two light emitting components 250a are configured to emit, for example, green light and red light to show a fully charged state and a not fully charged state of the rechargeable battery 10a, respectively.

In this embodiment, the circuit board assembly 200a further includes a plurality of light emitting components 230a and a microswitch 240a. The plurality of light emitting components 230a and the microswitch 240a are fixed on the circuit board 210a. The microswitch 240a is electrically connected to the plurality of light emitting components 230a via the circuit board 210a. The plurality of light emitting components 230a and the microswitch 240a are located on a side of the circuit board 210a located farthest away from the core 300a. The plurality of light emitting components 230a are, for example, light emitting diodes. In this embodiment, the shell 100a further includes a cantilever 160a, and further has a through hole 161a and a plurality of light transmission holes 170a. A fixed end 1600a of the cantilever 160a is fixed to the first side casing 1 10a. The first side casing 110a and the second side casing 120a together form the through hole 161a and the plurality of light transmission holes 170a located on the third outer surface 133a. The cantilever 160a is located in the through hole 161a. A movable end 1601a of the cantilever 160a opposite to the fixed end 1600a is configured to press the microswitch 240a. For example, when the microswitch 240a is pressed by the movable end 1601a of the cantilever 160a, at least a part of light emitting components 230a will emit light according to the remaining power of the rechargeable battery 10a so that the user can determine the remaining power of the rechargeable battery 10a according to the part of light emitting components 230a emitting light.

Note that the circuit board assembly 200a is not restricted to including the plurality of light emitting components 230a and the microswitch 240a. In other embodiments, the circuit board assembly may not include the plurality of light emitting components and the microswitch.

Note that the through hole 140a is not restricted to being located on the second outer surface 132a. In other embodiments, the placing direction of the connector on the circuit board may also be changed to allow the opening of the connector faces the third outer surface or the fourth outer surface. In this case, the through hole may also be disposed on the third outer surface or the fourth outer surface to expose the connector.

According to the rechargeable battery disclosed by above embodiments, since the circuit board assembly is not located between the core and the first outer surface and the electrode assembly is disposed on the first outer surface, cables electrically connected to the electrode assembly and the circuit board assembly can be prevented from being pulled due to external impacts on the electrode assembly, thereby preventing electrical contacts of the circuit board assembly from being damaged or protecting other electronic components on the circuit board assembly. Accordingly, a malfunction of the rechargeable battery is prevented.

It will be apparent to those skilled in the art that various modifications and variations can be made to the present disclosure. It is intended that the specification and examples be considered as exemplary embodiments only, with a scope of the disclosure being indicated by the following claims and their equivalents.

## Claims

1. A rechargeable battery (10), comprising:
a shell (100), having a first outer surface (131);
a circuit board assembly (200), disposed in the shell;
a core (300), disposed in the shell and electrically connected to the circuit board assembly; and
an electrode assembly (400), disposed on the first outer surface of the shell and electrically connected to the circuit board assembly;
wherein the circuit board assembly is not located between the core and the first outer surface.

2. The rechargeable battery according to claim 1, wherein the shell further has a second outer surface (132) and a third outer surface (133), the second outer surface faces away from the first outer surface, the third outer surface is located between the first outer surface and the second outer surface, and the circuit board assembly is located between the core and the second outer surface.

3. The rechargeable battery according to claim 2, wherein the circuit board assembly comprises a circuit board (210) and two connectors (220), the two connectors are fixed on and electrically connected to the circuit board, the circuit board is located between the core and the second outer surface, and the two connectors are located between the circuit board and the second outer surface.

4. The rechargeable battery according to claim 3, wherein the two connectors have different specifications.

5. The rechargeable battery according to claim 3, wherein the shell further has two through holes (140), the two through holes are located on the second outer surface and spaced apart from each other, and the two through holes expose the two connectors, respectively.

6. The rechargeable battery according to claim 1, wherein the shell (100a) further has a second outer surface (132a) and a third outer surface (133a), the second outer surface faces away from the first outer surface (131a), the third outer surface is located between the first outer surface and the second outer surface, and the circuit board assembly (200a) is located between the core (300a) and the third outer surface.

7. The rechargeable battery according to claim 6, wherein the circuit board assembly comprises a circuit board (210a) and a connector (220a), the connector is fixed on and electrically connected to the circuit board, the circuit board is located between the core and the third outer surface, and the connector is located between the circuit board and the core.

8. The rechargeable battery according to claim 7, wherein the shell further has a through hole (140a), the through hole is located on the second outer surface, and the through hole exposes the connector.

9. The rechargeable battery according to claim 7, wherein the circuit board assembly further comprises a plurality of light emitting components (230a) and a microswitch (240a), the plurality of light emitting components and the microswitch are fixed on the circuit board, the microswitch is electrically connected to the plurality of light emitting components via the circuit board, and the plurality of light emitting components and the microswitch are located on a side of the circuit board located farthest away from the core.

10. The rechargeable battery according to claim 6, wherein the shell comprises a first side casing (110a), a second side casing (120a) and a top plate (125a), the first side casing and the second side casing are fixed to each other and together form an accommodation space (150a) and an opening (151a), the opening is connected to the accommodation space and is located at a side of accommodation space, the top plate is disposed in the opening, the first outer surface is located on the top plate, the first side casing and the second side casing together form the second outer surface and the third outer surface, and the circuit board assembly and the core are disposed in the accommodation space.
